# EUROPEAN PATENT SPECIFICATION

(11) **EP 2 836 530 B1**
(45) Date of publication and mention of the grant of the patent: **27.05.2020**
(21) Application number: 13720272.7
(22) Date of filing: 10.04.2013
(51) Int. Cl.: C08G 18/08, C08G 18/12, C09D 175/14, C08G 18/32

(54) **POLYMER, COMPOSITION AND USE**
POLYMER, ZUSAMMENSETZUNG UND VERWENDUNG
POLYMÈRE, COMPOSITION DE POLYMÈRE ET UTILISATION CORRESPONDANTE

(30) Priority: 10.04.2012 EP 12163515
(43) Date of publication of application: 18.02.2015
(73) Proprietor: DSM IP Assets B.V., 6411 TE Heerlen (NL)
(72) Inventor: TENNEBROEK, Ronald, NL-6100 AA Echt (NL); SWAANS, Roel Johannes Marinus, NL-6100 AA Echt (NL); KOK, DE, Paul, NL-6100 AA Echt (NL)
(74) Representative: DSM Intellectual Property
(86) International application number: PCT/EP2013/057455
(87) International publication number: WO 2013/153093

(56) References cited:
- WO-A1-2005/023947
- WO-A1-2006/002865
- WO-A1-2009/074541
- WO-A1-2009/105396
- US-A- 5 623 016

## Description

The present invention relates to the field of polyurethanes especially urethane-acrylic based dispersions.

Urethane-acrylic (U-A) dispersions have good resistance to water, chemicals, solvents and abrasion and so are commonly used in coating compositions such as decorative and protective coatings.

To prepare stable aqueous urethane-acrylic dispersions, both the acrylic part and the polyurethane (PU) part must be dispersed in water. This can be achieved in part by surfactants and in part by incorporating suitable groups such as ionic or non-ionic hydrophilic groups in the polyurethane polymer either pendant to the polymer chain or in-chain. Such groups include anions such as carboxylic, sulfonic, sulfate or phosphate groups that are typically incorporated into the PU by reacting compounds containing reactive hydrogen and at least one suitable acid group (typically a carboxylic acid) with polyisocyanate to form the polyurethane component of the urethane-acrylic dispersion. It is undesirable that large amounts of acidic materials remain in the resultant dispersion thus a substantial part (if not all) of the acid present must be neutralised in the final product.

It is also desirable to reduce or eliminate the use of surfactants in an aqueous coating dispersions as the use of large amount of surfactant increases the water sensitivity of the coatings that are formed.

When simple inorganic bases (such as KOH) are added to neutralise anionic polyurethane dispersions to neutralise acid groups therein, they are found unsatisfactory. In general the viscosity of the polyurethane dispersion rises undesirably when strong inorganic bases are added. To prevent the dispersion destabilising the polyurethane, it may be modified with large amounts of hydrophilic groups such as polyethoxy groups. The resultant films and coatings (whether the PU is modified or not) are also highly water sensitive (compared to PUD neutralised by other agents) unless a further agent is added to cross-link the polyurethane. So other neutralising agents are used to prepare commercially available PU dispersions, the most common of which are volatile amines such as the tertiary amine triethyl amine (TEA). These materials are readily available and evaporated from the final film.

However it is known that volatile amines also have various disadvantages. For example they readily evaporate volatile organic compounds (VOC) during the film formation causing unacceptable environmental pollution and/or poor indoor air quality when used indoors. The use of such materials may be more strictly regulated in the future. Therefore it is desirable to find an alternative method of providing stable aqueous urethane-acrylic dispersions and/or neutralising acidic materials used during their preparation.

Various alternatives have been proposed to improve the stability of aqueous urethane dispersions.

US 2968575 describes a PU latex dispersed in water using an emulsifier.

US 4,501,852 describes stable aqueous dispersions of polyurethane-ureas containing (i) 10-120 meq per 100 g of anionic groups chemically incorporated therein and (ii) up to about 10% by weight of hydrophilic chains containing ethylene oxide (EO) units. To counter the anionic groups the formulation contains a mixture of volatile and non-volatile cations in an equivalent ratio from about 1:4 to 4:1. The examples use as component (ii) a non-ionic polyether monoalcohol of n-butanol, ethylene oxide and propylene oxide (in a molar ratio 83:17) having an OH-number of 26. This component aids dispersion but increases water sensitivity. The examples also use the undesirable NMP as a solvent.

US 4,701,480 describes aqueous polyurethane-urea dispersions with improved hydrolytic stability formed from an aqueous polyurethane-urea-dispersion containing carboxylic acid groups neutralized with volatile organic bases which are then converted to non-volatile cations by adding alkali metal salts of organic or inorganic acids in an amount sufficient to displace at least a portion of the volatile organic bases. The volatile organic bases may be optionally removed by distillation under reduced pressure. All the examples contain NMP and distillation is undesirable because it uses large amounts of energy and may cause excessive foaming (as described in US 2010/0099967 in comparative example XVI).

US 2006-0229409 describes polyurethane dispersions made from TMXDI with a special embodiment on page 9 where the use of metal hydroxides is mentioned. This is not exemplified in the examples nor is TMXDI a suitable diisocyanate for use in coatings (it is too soft).

US 2010-0098867 (Costa) describes a method of making aqueous dispersions of carboxylated anionic polyurethanes that are free of volatile amines and do not contain any polyoxyethylene or polyoxypropylene side chains. First a prepolymer (containing 2-10% by weight of isocyanate groups and 10-100 meq of carboxylic groups) is prepared by reacting: a polyol with a carboxylic acid group; a non-ionic polyol, and a (cyclo)aliphatic polyisocyanate. The prepolymer is dispersed in an aqueous solution of an alkaline metal hydroxide and then the prepolymer is chain extended with a polyamine.

EP1153051 describes aqueous dispersions of anionic polyurethanes with pendant carboxylic acid groups that are neutralised with a reactive volatile amine compound (tertiary amino functional acrylic monomer (DMAEMA)) that is subsequently incorporated in the polymer backbone by radical polymerization. Unreacted free monomer remains in the final product which thus still contains volatile amines. The monomer may also contain impurities in the monomer and hydrolysis may generate the undesirable side product dimethylethanol amine.

WO93/24551 describes an aqueous polyurethane polymer dispersion comprising the reaction product of: organic polyisocyanate; polyester polyol which incorporate polymerized units derived from dimer acid; non-ionic and/or ionic dispersing groups and at least one of the following polymerized units: cyclo-aliphatic polyol of molecular weight (Mw) < 400; cyclo-aliphatic polyacid of MW < 400, aromatic polyol MW< 500, aromatic diacid Mw < 500 and an active hydrogen chain extending compound.

WO 2001-027179 (Stahl) describes an anionic polyurethane dispersion which is neutralised by a tertiary amine functional urethane polymer or oligomer. Although the polymeric material is less volatile than reagents such as TEA, this method adds extra expense and complexity to preparation of the PU dispersion and is not completely successful at removing all acidic groups.

Surprising the applicant has found a means to stabilise aqueous dispersions of acrylate and anionic polyurethanes without the proceeding disadvantages.

In particular the applicant has found that adding an alkali metal neutralising agent at an early stage in the process reduces or avoids some or all of the preceding problems with the prior art.

Therefore broadly the invention comprises a process for preparing a Schiff base crosslinkable aqueous dispersion of a polyurethane [A], the process comprising the steps of:
(a) reacting components one and three (and two and four where present) to form an acidic isocyanate terminated prepolymer that comprises anionic or potentially anionic functional groups thereon; where:
   (1) component one comprises 10 to 80% by weight of at least one polyisocyanate optionally containing at least one anionic or potentially anionic dispersing group;
   (2) optional component two comprises up to 15% by weight of at least one isocyanate-reactive polyol containing at least one anionic or potentially anionic dispersing group;
   (3) component three comprises 15 to 85% by weight of at least one isocyanate reactive polyol other than component two if present, and having a weight average molecular weight greater than or equal to 500 Daltons, optionally containing at least one anionic or potentially anionic dispersing group; and
   (4) optional component four comprises up to 20% by weight of at least one isocyanate reactive polyol other than component three and two if present and having a weight average molecular weight less than 500 Daltons;
   where if component two is not present component one or three contains at least one anionic or potentially anionic dispersing group;
   where the amounts of components one to four are expressed as a weight percentage calculated from the total amount of the above components (i.e. one and three and optional two and/or four where present) being 100%; and
   where the mixture used in step (a) is substantially free of volatile amines and N-alkyl pyrrolidinones;
(b) adding to the reaction mixture from step (a) an alkali metal neutralising agent in an amount from 0.05 to 6 parts by weight substantially to neutralise the isocyanate terminated prepolymer obtained from step (a);
   where the amount (in weight parts) of the alkali metal neutralising agent is calculated based on the weight of alkali metal in the neutralising agent relative to the total amount of components one to four in step (a) being equal to 100 parts; and
(c) reacting the neutralised prepolymer from step (b) with an active hydrogen compound to extend the chain of the prepolymer to form an aqueous dispersion of polyurethane A.

It will be seen that the sum of the amounts of ingredients given (a) and (b) together will total greater than 100 parts by weight.

In the process of the invention any of components (1) (2) and/or (3) (i.e. any of these by themselves or any combination) may comprise at least one anionic or potentially anionic dispersing group. However it is preferred that the isocyanate component (1) does not contain an anionic or potentially anionic dispersing group but instead at least one such group comprises the polyol component (2).

Therefore in one embodiment of the process of the invention, step (a) comprises:
(a) reacting:
   (1) 10 to 80% by weight of at least one polyisocyanate;
   (2) 1 to 15% by weight of at least one isocyanate-reactive polyol containing at least one anionic or potentially anionic dispersing group;
   (3) 15 to 85% by weight of at least one isocyanate reactive polyol other than (2), and having a weight average molecular weight ≥ 500 Daltons optionally comprising at least one anionic or potentially anionic dispersing group; and
   (4) optionally up to 20% by weight of at least one isocyanate reactive polyol other than (2) and (3) and having a weight average molecular weight < 500 Dalton; to form an acidic isocyanate terminated prepolymer that comprises anionic or potentially anionic functional groups and which is substantially free of volatile amines and N-alkyl pyrrolidinones (such as TEA, NMP or NEP).

Preferably step (b) occurs during or substantially immediately after step (a).

Without being bound by any mechanism it is believed that in step (b) the metal cation from the alkali metal neutralising agent forms a counterion for the anionic group thereon (and/or anionic group formed from the potential anionic groups thereon)

A further aspect of the invention provides a process for preparing an aqueous coating composition comprising bringing into intimate admixture components (i) and (ii):
(i) 10% to 95%, preferably 20% to 80%, more preferably 30% to 65% by weight of a polyurethane dispersion A obtained and/or obtainable by the process of the invention as described herein; and
(ii) 90% to 5%, preferably 80% to 20%, more preferably 70% to 35% by weight of a vinyl polymer B optionally having a glass transition temperature ≥ 15°C
wherein
(i) and (ii) add up to 100% and are calculated based on weight of solids (excluding the water); and
where the composition (and both components (i) and (ii)) are substantially free of volatile amines and N-alkyl pyrrolidinones.

Preferably both components (i) and (ii) form different phases which are present in the same particles.

Preferably in the process of the invention as described above the polyurethane A and/or the vinyl polymer B are self cross-linkable, preferably Schiff base cross-linkable, under ambient conditions. More preferably the polyurethane A comprises a carbonyl group capable of undergoing Schiff base self-cross-linking.

A still further aspect of the invention provides an aqueous coating composition obtained and/or obtainable by a process of the invention.

Use of Schiff base crosslinkers has been described to make polyurethane foams. For example US4016113 describes use of certain aromatic or Spiro diamine Schiff bases to cross-link PU foams. Schiff base crosslinking of PU foams has also been described in US3321433, US3657192, US3890255, US3907721 and US3926867

However polyurethane foams are different from aqueous PU dispersions and especially from urethane acrylate dispersions where Schiff base crosslinking has not been used to improve stability. Surprisingly a Schiff base crosslinking reaction still occurs at alkaline environment. This was because urethane acrylic dispersions are typically alkaline but become acidic on drying (as amine evaporates) and it was believed that a low pH (acidic conditions) were essential for self crosslinking. In a system such as those of the present invention described herein (which are permanently alkaline) Schiff base cross-linking would not be expected to work.

For example see Journal of Applied Polymer Science Vol104 p3948 2007: 'Acid condition is indispensable for the crosslinking reaction between diacetone acrylamide and adipic acid dihydrazide. Acrylic acid is usually incorporated into copolymer to give an acid condition to facilitate the crosslinking reaction.' (page 3948, column 2 lines 26 to 33)

Also Journal Coat Technol. Res 5(3) p285 (2008) in the section discussing the "Fundamentals of keto-hydrazide crosslinking" states: 'Comparison of the initial rates of the reactions under different pH conditions clearly shows that the chemical reaction rate increases with decreasing pH, as illustrated in Fig. 4. We conclude then that the reaction is acid catalysed.' (page 288, column 2, lines 27 to 31). The section headed "Conclusions" states: 'Moreover, the crosslinking reaction is acid catalysed and the reaction rate increases as pH decreases.' (page 296, column 1, lines 21 to 23)

It can be seen that there is a technical prejudice against using Schiff base cross-linked acrylic polymers in non-acidic (neutralised) or alkaline systems. As it is well known that PU dispersions are acidic must be neutralised (for the reasons stated herein), Schiff base crosslinking has not been used in permanent alkaline systems.

The applicant has found surprisingly that the urethane acrylic systems when permanently alkaline neutralized can still be self cross-linked via a Schiff base mechanism. In particular the applicant has found that these acidic aqueous PU dispersions that are subsequently neutralised may contain Schiff base crosslinkable urethane and/or vinyl polymers to produce urethane acrylic dispersions that reduce or avoid some or all of the preceding problems with the prior art.

Therefore broadly the present invention provides an aqueous coating composition comprising:
(i) 10 to 95% by weight of a Schiff base crosslinkable polyurethane A obtained by the reaction of:
   (a) an isocyanate terminated prepolymer formed from components one to five comprising:
      (1) 10 to 80 parts by weight of at least one polyisocyanate
      (2) 1 to 15 parts by weight of at least one isocyanate-reactive polyol containing at least one anionic or potentially anionic dispersing group
      (3) 15 to 84 parts by weight of at least one isocyanate reactive polyol other than (2) of weight average molecular weight ≥ 500 Daltons; optionally containing at least one anionic or potentially anionic dispersing group
      (4) optionally up to 20 parts by weight of at least one isocyanate reactive polyol other than (2) or (3) of weight average molecular weight < 500 Daltons
      (5) 0.05 to 6 parts by weight of an alkali metal neutralising agent (preferably whose cation acts as counterion of the anionic group of (2))
      where the amounts of (1), (2), (3), (4) and (5) are calculated as a weight parts relative to the total amount of components (1) to (5) being 100 weight parts, component 3 and/or 4 contain Schiff base crosslinkable carbonyl groups
   (b) an active hydrogen chain extending compound; and
(ii) 90 to 5% by weight of a Schiff base cross-linkable carbonyl groups containing vinyl polymer B wherein the weight % amounts of (i) and (ii) are calculated as a percentage of the total amount of (i) and (ii) and these percentages add up to 100%; and
   where the composition is:
   substantially free of volatile amines and N-alkyl pyrrolidinones (preferably solvent free); and
   is neutralised with a metal neutralising agent and the composition comprises a polyamine of polyhydrazide compound.

Alternatively, the present invention provides an aqueous coating composition comprising:
(i) 10 to 95% by weight of a Schiff base crosslinkable polyurethane A obtained by the reaction of:
   (a) an isocyanate terminated prepolymer formed from components one to five comprising:
      (1) 10 to 80 parts by weight of at least one polyisocyanate
      (2) 1 to 15 parts by weight of at least one isocyanate-reactive polyol containing at least one anionic or potentially anionic dispersing group
      (3) 15 to 84 parts by weight of at least one isocyanate reactive polyol other than (2) of weight average molecular weight ≥ 500 Daltons; optionally containing at least one anionic or potentially anionic dispersing group
      (4) optionally up to 20 parts by weight of at least one isocyanate reactive polyol other than (2) or (3) of weight average molecular weight < 500 Daltons
      (5) 0.05 to 6 parts by weight of an alkali metal neutralising agent (preferably whose cation acts as counterion of the anionic group of (2))
      where the amounts of (1), (2), (3), (4) and (5) are calculated as a weight parts relative to the total amount of components (1) to (5) being 100 weight parts, component 3 and/or 4 contain Schiff base crosslinkable carbonyl groups
   (b) an active hydrogen chain extending compound; and
(ii) 90 to 5% by weight of a vinyl polymer B wherein the weight % amounts of (i) and (ii) are calculated as a percentage of the total amount of (i) and (ii) and these percentages add up to 100%; and
   where the composition is:
   substantially free of volatile amines and N-alkyl pyrrolidinones (preferably solvent free); and
   is neutralised with a metal neutralising agent and the composition comprises a polyamine of polyhydrazide compound

Alternatively, the present invention provides an aqueous coating composition comprising:
(i) 10 to 95% by weight of a polyurethane [A] obtained by the reaction of:
   (a) an isocyanate terminated prepolymer formed from components one to five comprising:
      (1) 10 to 80 parts by weight of at least one polyisocyanate
      (2) 1 to 15 parts by weight of at least one isocyanate-reactive polyol containing at least one anionic or potentially anionic dispersing group
      (3) 15 to 84 parts by weight of at least one isocyanate reactive polyol other than (2) of weight average molecular weight ≥ 500 Daltons; optionally containing at least one anionic or potentially anionic dispersing group
      (4) optionally up to 20 parts by weight of at least one isocyanate reactive polyol other than (2) or (3) of weight average molecular weight < 500 Daltons
      (5) 0.05 to 6 parts by weight of an alkali metal neutralising agent (preferably whose cation acts as counterion of the anionic group of (2))
      where the amounts of (1), (2), (3), (4) and (5) are calculated as a weight parts relative to the total amount of components (1) to (5) being 100 weight parts,
   (b) an active hydrogen chain extending compound; and
(ii) 90 to 5% by weight of a Schiff base crosslinkable carbonyl groups containing vinyl polymer B wherein the weight % amounts of (i) and (ii) are calculated as a percentage of the total amount of (i) and (ii) and these percentages add up to 100%; and
   where the composition is:
   substantially free of volatile amines and N-alkyl pyrrolidinones (preferably solvent free); and
   is neutralised with a metal neutralising agent and the composition comprises a polyamine of polyhydrazide compound.

Another aspect of the invention provides an aqueous coating as claimed immediately above, in which polyurethane A and/or vinyl polymer B is Schiff base cross-linkable under ambient conditions, i.e. an aqueous coating composition comprising:
(i) 10 to 95% by weight of a polyurethane A obtained by the reaction of:
   (a) an isocyanate terminated prepolymer formed from components one to five comprising:
      (1) 10 to 80 parts by weight of at least one polyisocyanate
      (2) 1 to 15 parts by weight of at least one isocyanate-reactive polyol containing at least one anionic or potentially anionic dispersing group
      (3) 15 to 84 parts by weight of at least one isocyanate reactive polyol other than (2) of weight average molecular weight ≥ 500 Daltons
      (4) optionally up to 20 parts by weight of at least one isocyanate reactive polyol other than (2) or (3) of weight average molecular weight < 500 Daltons
      (5) 0.05 to 6 parts by weight of an alkali metal neutralising agent (preferably whose cation acts as counterion of the anionic group of (1), (2) or (3))
      where the amounts of (1), (2), (3), (4) and (5) are calculated as a weight parts relative to the total amount of components (1) to (5) being 100 weight parts,
   (b) an active hydrogen chain extending compound; and
(ii) 90 to 5% by weight of a vinyl polymer B wherein the weight % amounts of (i) and
(ii) are calculated as a percentage of the total amount of (i) and (ii) and these percentages add up to 100%;
wherein the polyurethane A contains carbonyl groups which are Schiff base crosslinkable under ambient conditions and/or the vinyl polymer B contains carbonyl groups which are Schiff base crosslinkable under ambient conditions, and
where the composition is:
substantially free of volatile amines and N-alkyl pyrrolidinones (preferably solvent free); and is neutralised with a metal neutralising agent and the composition comprises a polyamine and/or polyhydrazide compound.

The following components may preferably be present in the following amounts by weight given as parts by weight or percentages by weight of the total amount of components (1) to (5) where present.

Preferably component (1) (the polyisocyanate) is present in an amount from 15 to 70, more preferably from 20 to 60, most preferably 25 to 50 by weight.

Preferably component (2) (the anioinic isocyanate-reactive polyol) is present in an amount from 2 to 12, more preferably from 3 to 10, most preferably 4 to 7 by weight.

Preferably component (3) (the high (>500D) mw isocyanate-reactive polyol) is present in an amount from 20 to 80, more preferably from 25 to 75, most preferably 30 to 60 by weight.

Preferably optional component (4) (the low (<500D) mw isocyanate-reactive polyol) is present in an amount from 0.5 to 20, more preferably from 1 to 15, most preferably 2 to 10 by weight.

Preferably optional component (5) (the alkali metal neutralising agent) is present in an amount from 0.1 to 6, more preferably from 0.2 to 5, most preferably 0.5 to 4 by weight.

The term "alkali metal neutralising agent" denotes an alkali metal compound, preferably an alkali metal salt, that is sufficiently basic under the conditions (under which the polyurethane dispersion is prepared) to neutralise the acidic groups on the polymer. Without wishing to be bound by any mechanism it is believed that ions from the alkali metal neutralising agent act as counter ions to ionic groups formed from acidic groups on the polymer. Preferred alkali metal salts comprise cations such as potassium, sodium and/or lithium with sodium being more preferred. Preferred alkali metals salt comprise anions such as carbonate, bicarbonate, hydroxide and/or hydride, with hydroxide being more preferred. The most preferred alkali metal neutralising agents are sodium and/or potassium hydroxide.

The polyurethane dispersions of the invention may (unless indicated otherwise herein) be prepared conventionally using conventional polyols and isocyanates.

For example the polyisocyanate used in the present invention as component one may be selected from those described in WO2007-006586 as polyisocyanate component (i) (see from page 7, line 33 to page 8, line 20 - this passage incorporated herein by reference).

For example the NCO-reactive polyols used in the present invention as components two, three and four (subject to the other requirements for these components specified herein) may be selected from those described in WO2007-006586 as components (ii), (iii) and/or (iv) (see from page 8, line 30 to page 9, line 24 - this passage also incorporated herein by reference)

The term "ambient self cross-linkable" denotes a polymer that under ambient conditions will form covalent bonds between different functional groups on different polymer chains to form cross links without the addition of additional separate crosslinker. Preferred self cross-linking urethane-acrylic polymers are those that bear both carbonyl functional groups and carbonyl reactive amine and/or hydrazine functional groups to impart crosslinkability to the urethane-acrylic polymer. Preferably either polyurethane [A] or vinyl polymer [B] are capable of self cross-linking by a Schiff base reaction under ambient conditions (also known as Schiff base cross-linking). Alternatively both polyurethane A and vinyl polymer B are capable of self-crosslinking by Schiff base reaction under ambient conditions.

Without wishing to be bound by any mechanism it is believed that in Schiff base crosslinking the carbonyl and (C=O reactive) amine / hydrazine groups react together in a Schiff base reaction to link the polymer chains. The carbonyl groups may be incorporated into the vinyl polymer by the free-radical addition polymerisation of at least one carbonyl-containing mono-ethylenically unsaturated monomer (e.g. diacetone diacrylamide (DAAM). The carbonyl reactive amine and/or hydrazide groups may be introduced by addition of polyamine and/or polyhydrazide compounds (e.g. adipic acid dihydrazide) Similarly a carbonyl functional component (3) can be used to incorporate Schiff base reactable groups in the polyurethane.

Component one comprises a polyisocyanate. Suitable polyisocyanates may comprise aliphatic, cycloaliphatic, araliphatic, aromatic and/or polyisocyanates modified by the introduction of urethane, allophanate, urea, biuret, carbodiimide, uretonimine, urethdione or isocyanurate residues. Examples of suitable polyisocyanates include ethylene diisocyanate, 1,6-hexamethylene diisocyanate, isophorone diisocyanate, cyclohexane-1, 4-diisocyanate, 4,4'-dicyclohexylmethane diisocyanate, p-xylylene diisocyanate, α,α'-tetramethylxylene diisocyanate, 1,4-phenylene diisocyanate, 2,4-toluene diisocyanate, 2,6-toluene diisocyanate, 4,4'-diphenylmethane diisocyanate, polymethylene polyphenyl polyisocyanates, 2,4'-diphenylmethane diisocyanate, 3(4)-isocyanatomethyl-1-methyl cyclohexyl isocyanate, 1,5-naphthylene diisocyanate and mixtures thereof. Preferred polyisocyanates are isophorone diisocyanate, 4,4'-dicyclohexylmethane diisocyanate, toluenediisocyanate and 4,4'-diphenylmethane diisocyanate.

Components two, three and four comprises various polyols as defined herein. Suitable polyols may comprise propylene glycols, poly(propylene oxide/ethylene oxide) copolymers, polytetrahydrofuran, polybutadiene, hydrogenated polybutadiene, poysiloxane, polyamide polyesters, isocyanate-reactive polyoxyethylene compounds, polyester, polyether, polyether ester, polycaprolactone, polythioether, polycarbonate, polyethercarbonate, polyacetal and polyolefin polyols.

Preferably component two comprises a polyol with an anionic or potential anionic dispersing group thereon.

Preferred anionic dispersing groups are carboxylic, phosphate, phosphonate or sulfonic acid groups. Preferred potentially anionic dispersing groups are precursors for the anionic dispersing groups described herein, i.e. groups which under the conditions of step (a) will transform into the anionic dispersing groups. Most preferred anionic dispersing groups are carboxylic or sulfonic acid groups. Conversion to the salt form is achieved by neutralisation of anionic groups with an alkali metal neutralising agent during step (a).

Component three comprises a isocyanate reactive polyol with a weight average molecular weight of greater than 500 daltons (high mw polyol). Component four comprises a isocyanate reactive polyol with a weight average molecular weight of less than 500 Daltons.

In case of polyurethane A is Schiff base crosslinkable, preferably component 3 contains carbonyl groups suitable for Schiff base crosslinking. The carbonyl content of component 3 is 0.1-10 meq carbonyl/gr polyol, preferably 0.5-5 meq carbonyl/gr polyol, most preferably 1-3 meq carbonyl/gr polyol.

The presence of carbonyl (i.e. aldo or ketone) functional groups in the examples of the present invention can be determined by any suitable known method such as by means of ¹³C resonances in ¹³C mnr spectrum. For ketones and aldehyde carbonyl groups these generally appear from 190 to 210 ppm irrespective of the side-chain substituents. These can be distinguished from carbon 13 resonances from other C=O groups such as in carboxylic acid derivatives (amides, esters, carboxylic acids, acid chlorides etc.) which generally appear from 160 to 185 ppm. For example in one suitable method the ¹³C NMR spectra of a 200 mg sample in 600 microlitres of a carrier medium of CDCl₃ and Chromium (III) acetylacetonate (also denoted as Cr(acac)₃) may be recorded. Alternatively the presence of carbonyl groups (i.e. aldo or ketone) in the process of the invention can be determined from relevant absorption peaks in the infrared spectrum of the reaction mixture. From these or other known methods the amount of unreacted carbonyl groups present in sample can be determined.

In case of polyvinyl polymer B is Schiff base crosslinkable, the vinyl polymer contains carbonyl groups suitable for Schiff base crosslinking. Preferably the vinyl polymer contains 0.1-20 wt% of a carbonyl functional monomer on total monomers, more preferably 0.5-10 wt% of a carbonyl functional monomer on total monomers, most preferably 1-5 wt% of a carbonyl functional monomer on total monomers.

Preferably the equivalent ratio of amine groups to carbonyl groups is 0.2 to 1.5, more preferably 0.35 to 1.1, most preferably 0.6 to 0.9.

In one embodiment of the invention it is preferred that the acrylic urethane of the invention and/or prepared according to the process of the invention is substantially free of any non-ionic functional polyols as it is believed that such components may deteriorate water resistance.

In a still further embodiment of the invention it is preferred that the polyurethane dispersions (PUD) and/or the urethane acrylics of or prepared in the present invention are permanently basic (i.e. after neutralisation with the alkali metal neutralising agent), preferably exhibiting a pH of > 8. Although PUDs and urethane acrylic coatings with a high pH were thought to be undesirable, the applicant has surprisingly found that they may solve some or all of the problems identified herein.

Optionally additional surfactant may be added to facilitate dispersing the urethane however this is not preferred as it has a detrimental effect on the water resistance.

In the present invention it is preferred that the neutralising agent is added to the prepolymer as by pre-neutralizing the prepolymer urethanes with lower acid values can be synthesized which have improved water resistance. More preferably the neutralizing agent is added as aqueous solution.

Preferred compositions of the invention have low acid values (AV), more preferably the AV of the total composition is from 1 to 40 mg KOH / g, more preferably 2-20 mg KOH/g, most preferably 3-15 mg KOH/g.

Without wishing to be bound by any mechanism it is believed that (alkali) metal ion neutralized urethane-acrylic based dispersions contain sufficient ambient self crosslinkable groups to compensate for the deteriorated chemical stain resistances, specifically water resistance and optionally may also be made without a tin catalyst so the composition may be tin free. Such urethane acrylic dispersions may be advantageously used as coatings for surfaces such as floors.

The PUD and urethanes of and/or used in the present invention are cross-linked (preferably at ambient temperature under standard conditions) by a Schiff base mechanism which means that crosslinking takes place by the reaction of a carbonyl functional group(s) (as defined herein) with a carbonyl-reactive amine and/or hydrazine (or blocked amine and/or blocked hydrazine) functional group. In this context "carbonyl functional group means an aldo or keto group and includes enolic carbonyl groups such as found in acetoacetyl groups. Suitable carbonyl-reactive compounds may comprise Schiff bases (or precursors therefor) which are compounds comprising at least one functional group with a carbon-nitrogen double bond where the nitrogen atom is connected to an aryl and/or alkyl group (and not hydrogen), such as stable imines for example compounds having the general formula R'R"C=NR'" where R', R" and R'" are independently organic moieties. Useful Schiff bases comprise azomethine and secondary aldimines (azomethines where the carbon is connected to a hydrogen atom, i.e. of general formula R'CH=NR") and/or Schiff bases derived from aniline, where R" is a phenyl or a substituted phenyl such compounds also referred to as anils. Schiff base precursors denote any suitable compounds which under the reaction conditions described herein transform or react to form a Schiff base which is capable of undergoing Schiff base crosslinking as defined herein. Examples of carbonyl-reactive amine (or blocked amine) functional groups include any of the following compounds or groups: R-NH₂, R-O-NH₂, R-O-N=C<, R-NH-C(=O)-O-N=C< and/or R-NH-C(=O)-O-NH₂ where R is optionally substituted C₁ to C₁₅, preferably C₁ to C₁₀ alkylene, optionally substituted alicyclic, optionally substituted aryl, and/or R may also be part of a polymer. Examples of carbonyl-reactive hydrazine (or blocked hydrazine) compounds or groups include R-NH-NH₂, R-C(=O)-NH-NH₂, R-C(=O)-NH-N=C<, R-NH-C(=O)-NH-NH₂ and/or R-NH-C(=O)-NH-N=C< where R is as described above.

Many other variations embodiments of the invention will be apparent to those skilled in the art and such variations are contemplated within the broad scope of the present invention.

Further aspects of the invention and preferred features thereof are given in the claims herein.

### Examples

The present invention will now be described in detail with reference to the following non limiting examples which is by way of illustration only.

### Abbreviations:

- DMPA =: dimethylolpropionic acid
- MMA =: methyl methacrylate
- n-BA =: n-butylacrylate
- BMA =: butyl methacrylate
- EDTA =: ethylenediamine tetraacetic acid

Viscosity was determined with a Brookfield DV-I viscometer (spindle S61, 60 rpm, 23°C)

Particle size distribution was measured on a Particle Size Distribution Analyser (PSDA) from Polymer Laboratories. Samples are diluted until a concentration of approximately 0,05%. Samples are filtered over 2 micron filtered and measured on Cartridge Type 2 (20nm to 1500nm).

Reagents and materials:
- PL-PSDA Eluent concentrate: 0.04% Sodium azide solution (Polymer Laboratories part no. 0850- 2000, 4x 100ml)
- PL-PSDA Marker: 0.02 g 3-nitrobenzene sulfonic acid in 250ml Ultra pure water.
- Standards: Latex Particle Size Standards from 2-1000 nm; KSTN0026, KSTN 0027, KSTN0028 and KSTN0033 t/m KSTN0039
- Ultra pure demineralized water or HPLC grade water.
- Syringe filters: regenerated cellulose, 0.45µm membrane, Spartac Millex-AP 20 pre filter 25 MM, 2.0µm membrane, Millipore.

For determining the particle size value, the median diameter is mentioned in the examples. When a broad particle size distribution is found, the diameter at peak value is mentioned.

### Comparative Example Comp A (reproduced from example XI of US 2010/009867 (Da Costa))

A reaction vessel, equipped with internal thermometer, stirrer and cooler, was filled, under nitrogen atmosphere and at room temperature, with 442.6 g of polypropylene ether glycol (having molecular weight 2,000 g/mol), 30.9 g of DMPA and 50.0 g of N-methylpyrrolidone. The mixture was heated to 40 °C and stirred for 30 minutes. 213.2 g Desmodur W (available from Bayer) was added under stirring to the homogeneous mixture which was then heated to 60°C for 30 minutes. The reaction temperature was brought to 100°C and maintained for 2 hours, until the titrimetric determination of the free NCO groups still present gave a calculated value of 4.12% by weight. 650 g of the obtained prepolymer, cooled to 65°C, are dispersed in 10 minutes under vigorous stirring into 1057.1 g of demineralised water cooled at 18°C and containing 10.84 g of potassium hydroxide. Then 65.2 g of a 15.5% aqueous solution of hydrazine are added in 10 minutes and a maximum temperature of 34°C is reached during the extension step. After 30 minutes stirring, the NCO peak in the IR spectrum at 2240 cm⁻¹ is disappeared and 1.780 g of BYK® 346 are added. The resulting amine free (but N-methyl pyrrolidone containing) polyurethane dispersion had a solids content of 34.3 wt %, a pH of 8.0 and a viscosity of 66 cps. The median particle size was 170 nm.

### Example 1

PEC-205 is a ketone-functional polyester polyol, available from DSM, which has a hydroxyl value of 80 mg KOH/g and an acid value of < 1 mg KOH/g. The ketone functionality is 1.7 milliequivalents carbonyl groups per g polyol. A 2000 cm³ flask equipped with a thermometer and overhead stirrer was charged with 144.12 g of polyol PEC-205, 76.37 g polyTHF 650 (OH-value = 173.5 mg KOH/g), 231.18 g Desmodur W (available from Bayer), 29.64 g DMPA, 69.42 g MMA and 0.11 g butylated hydroxytoluene. This mixture was heated to 50°C and tin octoate (0.20 g) was added. The reaction was allowed to exotherm to 90° C. After the exotherm was complete the reaction was kept at 90° C for 2 hours. The isocyanate content of the prepolymer was 6.54% (theoretical 6.72%). Then 540.0 g of the obtained prepolymer was cooled to a temperature of 40°C and 191.41 g of a 5.68% KOH solution in demineralized water was added under vigorous stirring. Subsequently 704.14 g of demineralized water was added to the flask and the mixture was stirred until a homogeneous dispersion was obtained. After that, 71.37 g of a 15.5% hydrazine solution was added together with 34.0 g of water. The radical polymerization was initiated by the addition of 0.48 g of tertiary butyl hydroperoxide in demineralized water, 0.011 g of iron(II)EDTA and a subsequent feed addition of 17.0 g of a 1% solution of isoascorbic acid in demineralized water, over a period of 10 minutes. Finally, 15.29 g of adipic acid dihydrazide and 4.14 g of BYK®-346 were added. The batch was filtered through a filter cloth to remove any coagulum formed during the reaction. The resulting amine free polyurethane acrylic hybrid dispersion had a solids content of 35.7 wt %, a pH of 7.5 and a viscosity of 36 cps. The median particle size was 47 nm.

### Comparative Example Comp B

A 2000 cm³ flask equipped with a thermometer and overhead stirrer was charged with 99.66 g polypropylene glycol 1000 (OH-value = 112 mg KOH/g), 137.82 g polypropylene glycol 2000 (OH-value = 56 mg KOH/g), 172.48 g Desmodur W (available from Bayer), 21.58 g DMPA, 107.88 g MMA and 0.17 g butylated hydroxytoluene. This mixture was heated to 50°C and tin octoate (0.11 g) was added. The reaction was allowed to exotherm to 90° C. After the exotherm was complete the reaction was kept at 90° C for 2 hours. The isocyanate content of the prepolymer was 4.99% (theoretical 5.12%).

528.23 g of the obtained prepolymer was cooled to a temperature of 40°C and 186.65 g of a 5.68% KOH solution in demineralized water was added under vigorous stirring.

Subsequently 744.78 g of demineralized water was added to the flask and the mixture was stirred until a homogeneous dispersion was obtained. After that, 53.19 g of a 15.5% hydrazine solution was added together with 17.6 g of water.

The radical polymerization was initiated by the addition of 0.74 g of tertiary butyl hydroperoxide, 0.02 g of iron(II)EDTA and a subsequent feed addition of 26.4 g of a 1% solution of isoascorbic acid in demineralized water, over a period of 10 minutes.

The batch was filtered through a filter cloth to remove any coagulum formed during the reaction. The resulting amine free polyurethane acrylic hybrid dispersion had a solids content of 34.3 wt %, a pH of 7.7 and a viscosity of 15 cps. The median particle size was 59 nm.

### Example 2

PEC-205 is a ketone-functional polyester polyol, available from DSM, which has a hydroxyl value of 80 mg KOH/g and an acid value of < 1 mg KOH/g. The ketone functionality is 1.7 milliequivalents carbonyl groups per g polyol.

A 2000 cm³ flask equipped with a thermometer and overhead stirrer was charged with 237.48 g of polyol PEC-205, 172.48 g Desmodur W (available from Bayer), 21.58 g DMPA, 107.88 g MMA and 0.17 g butylated hydroxytoluene. This mixture was heated to 50°C and tin octoate (0.11 g) was added. The reaction was allowed to exotherm to 90° C. After the exotherm was complete the reaction was kept at 90° C for 2 hours. The isocyanate content of the prepolymer was 4.83% (theoretical 5.12%).

526.9 g of the obtained prepolymer was cooled to a temperature of 40°C and 186.17 g of a 5.68% KOH solution in demineralized water was added under vigorous stirring.

Subsequently 742.9 g of demineralized water was added to the flask and the mixture was stirred until a homogeneous dispersion was obtained. After that, 53.05 g of a 15.5% hydrazine solution was added together with 17.6 g of water.

The radical polymerization was initiated by the addition of 0.64 g of tertiary butyl hydroperoxide, 0.02 g of iron(II)EDTA and a subsequent feed addition of 26.33 g of a 1% solution of isoascorbic acid in demineralized water, over a period of 10 minutes. Finally, 25.10 g of adipic acid dihydrazide was added.

The batch was filtered through a filter cloth to remove any coagulum formed during the reaction. The resulting amine free polyurethane acrylic hybrid dispersion had a solids content of 34.3 wt %, a pH of 7.3 and a viscosity of 1995 cps. The median particle size was 56 nm.

### Example 3

PEC-205 is a ketone-functional polyester polyol, available from DSM, which has a hydroxyl value of 80 mg KOH/g and an acid value of < 1 mg KOH/g. The ketone functionality is 1.7 milliequivalents carbonyl groups per g polyol. A 2000 cm³ flask equipped with a thermometer and overhead stirrer was charged with 660.37 g of polyol PEC-205, 479.63 g Desmodur W (available from Bayer), 60.0 g DMPA, 300.0 g MMA and 0.30 g butylated hydroxytoluene. This mixture was heated to 50°C and tin octoate (0.35 g) was added. The reaction was allowed to exotherm to 90° C. After the exotherm was complete the reaction was kept at 90° C for 2 hours. The isocyanate content of the prepolymer was 4.97% (theoretical 5.13%). Then 600.0 g of the obtained prepolymer was cooled to a temperature of 40°C and 170.4 g of a 5.89% KOH solution in demineralized water was added under vigorous stirring. Subsequently 891.0 g of demineralized water was added to the flask and the mixture was stirred until a homogeneous dispersion was obtained. After that, 65.96 g of a 15.5% hydrazine solution was added together with 10.0 g of water. The radical polymerization was initiated by the addition of 0.25 g of tertiary butyl hydroperoxide, 0.012 g of iron(II)EDTA and a subsequent feed addition of 14.4 g of a 2.5% solution of isoascorbic acid in demineralized water, over a period of 10 minutes. The batch was mixed for 10 minutes at 45°C and subsequently was cooled to 25°C. Then 476.0 g of this urethane/acrylic hybrid dispersion was diluted with 150 g of demineralized water and 70.66 g of n-butyl acrylate and 29.44 g of methyl methacrylate were added to the mixture, which was then stirred for one hour. After that, 0.3 g of tertiary butyl hydroperoxide were added and a second radical polymerization of the (meth)acrylic monomers was initiated by a feed addition of 12.0 g of a 1% solution of isoascorbic acid in demineralized water, over a period of 10 minutes. After completion of the reaction, 8.52 g of adipic acid dihydrazide and 25.6 g of demineralized water were added. The batch was filtered through a filter cloth to remove any coagulum formed during the reaction. The pH of the resultant composition was about 7. The resulting amine free polyurethane acrylic hybrid dispersion had a solids content of 35 wt %. The acid value of the dispersion is 10.5 mg KOH/g solid resin. Urethane/acrylic ratio is 50/50 and theoretical value of the overall Tg of the acrylic phase is 0°C.

The resulting amine free polyurethane acrylic hybrid dispersion had a solids content of 34.2 wt %, a pH of 6.9 and a viscosity of 10 cps. The median particle size was 65 nm.

### Example 4

A polyester polyol was synthesized from the following components: Pripol 1009 (available from Croda, 49 wt%), adipic acid (12 wt%) and 1,4 cyclohexane dimethanol (39 wt%). The polyester polyol had a hydroxyl value of 113 mg KOH/g and an acid value of 0.47 mg KOH/g. A 2000 cm³ flask equipped with a thermometer and overhead stirrer was charged with 324.87 g of this polyester polyol, 253.51 g Desmodur W (available from Bayer), 21.0 g DMPA, 150.04 g MMA and 0.35 g butylated hydroxytoluene. This mixture was heated to 50°C and tin octoate (0.35 g) was added. The reaction was allowed to exotherm to 90° C. After the exotherm was complete the reaction was kept at 90° C for 2 hours. The isocyanate content of the prepolymer was 5.23% (theoretical 5.42%). Then 332.9 g of the obtained prepolymer was cooled to a temperature of 40°C and 82.40 g of a 5.68% KOH solution in demineralized water and 8.14 g of Antarox CA-630 were added under vigorous stirring. Subsequently 521.7 g of demineralized water was added to the flask and the mixture was stirred until a homogeneous dispersion was obtained. After that, 39.88 g of a 15.5% hydrazine solution was added together with 20.49 g of water. Subsequently 0.82 g of Tego foamex 805, 294.47 g of demineralized water, 54.2316 g of n-butyl acrylate, 127.19 g of methyl methacrylate and 23.46 g of butyl methacrylate were added and the mixture was stirred for one hour. After that, 2.36 g of tertiary butyl hydroperoxide and 0.03 g of iron(II)EDTA were added. The radical polymerization of the (meth)acrylic monomers was initiated by a feed addition of 67.9 g of a 1% solution of isoascorbic acid in demineralized water, over a period of 10 minutes. Then 400.0 g of this dispersion was used for a next radical polymerization step. To this amount, 57.0 g of demineralized water, 23.8 g of methyl methacrylate, 9.71 g of n-butyl acrylate and 1.04 g of diacetone acrylamide were added and the mixture was stirred for one hour. After that, 0.104 g of tertiary butyl hydroperoxide and 0.004 g of iron(II)EDTA were added. The radical polymerization of the (meth)acrylic monomers was initiated by a feed addition of 2.76 g of a 2 % solution of isoascorbic acid in demineralized water, over a period of 10 minutes. Finally, 0.38 g of adipic acid dihydrazide were added to the dispersion.

The batch was filtered through a filter cloth to remove any coagulum formed during the reaction. The resulting amine free polyurethane acrylic hybrid dispersion had a solids content of 34.8 wt %, a pH of 7.9 and a viscosity of 12 cps.

### Example 5

PEC-205 is a ketone-functional polyester polyol, available from DSM, which has a hydroxyl value of 80 mg KOH/g and an acid value of < 1 mg KOH/g. The ketone functionality is 1.7 milliequivalents carbonyl groups per g polyol. A 2000 cm³ flask equipped with a thermometer and overhead stirrer was charged with 144.12 g of polyol PEC-205, 76.37 g polyTHF 650 (OH-value = 173.5 mg KOH/g), 231.18 g Desmodur W (available from Bayer), 29.64 g DMPA, 69.42 g MMA and 0.11 g butylated hydroxytoluene. This mixture was heated to 50°C and tin octoate (0.20 g) was added. The reaction was allowed to exotherm to 90° C. After the exotherm was complete the reaction was kept at 90° C for 2 hours. The isocyanate content of the prepolymer was 6.54% (theoretical 6.72%). Then 540.0 g of the obtained prepolymer was cooled to a temperature of 40°C and 191.41 g of a 5.68% KOH solution in demineralized water was added under vigorous stirring. Subsequently 704.14 g of demineralized water was added to the flask and the mixture was stirred until a homogeneous dispersion was obtained. After that, 71.37 g of a 15.5% hydrazine solution was added together with 34.0 g of water. The radical polymerization was initiated by the addition of 0.48 g of tertiary butyl hydroperoxide in demineralized water, 0.011 g of of iron(II)EDTA and a subsequent feed addition of 17.0 g of a 1% solution of isoascorbic acid in demineralized water, over a period of 10 minutes. Finally, 4.14 g of BYK®-346 were added. 200.0 g of this dispersion was used for a next radical polymerization step. To this amount, 153.3 g of demineralized water, 58.76 g of methyl methacrylate, 23.96 g of n-butyl acrylate and 2.56 g of diacetone acrylamide were added and the mixture was stirred for one hour. After that, 0.26 g of tertiary butyl hydroperoxide and 0.008 g of iron(II)EDTA were added. The radical polymerization of the (meth)acrylic monomers was initiated by a feed addition of 6.82 g of a 2 % solution of isoascorbic acid in demineralized water, over a period of 10 minutes. Finally, 2.86 g of adipic acid dihydrazide were added to the dispersion. The batch was filtered through a filter cloth to remove any coagulum formed during the reaction. The resulting amine free polyurethane acrylic hybrid dispersion had a solids content of 34.2 wt %, a pH of 7.8 and a viscosity of 19 cps..

**Table 1: Formulations**

| Example | Coalescent | BYK-346 | Film appearance |
|---|---|---|---|
| Comp A | None | None | Good |
| Ex 1 | 10% Dowanol DPM | 0.25% | Good |
| Comp B | 1% Dowanol DPnB | 0.25% | Good |
| Ex 2 | 10% Dowanol DPnB | 0.25% | Good |
| Ex 3 | 10% Dowanol DPnB | 0.25% | Good |
| Ex 4 | 12% Dowanol DPM | 0.50% | Good |
| Ex 5 | 10% Dowanol DPM | 0.25% | Good |

Formulations were prepared by slow addition of the additives (mentioned in the Table above) to the polyurethane dispersion, while stirring.

### Stain Resistance

The examples, prepared and formulated as described above were cast onto a Leneta test chart using a wire rod at a wet film thickness of 125 micron. The cast films were then allowed to dry at room temperature for 1 hour, followed by ageing of the coatings at 50°C for 16 hours. The coatings were allowed to cool to room temperature for 1 hour.

The stain resistance of the coated cards towards the following stains were then assessed: water, ethanol (48%), detergent (Andy, 50% solution), coffee, hot pan. In all cases, a spot (1 cm²) of the respective stain was placed on the coating and covered with a piece of filter paper and a watch glass. In case of the "hot pan test" a small glass beaker filled with boiling hot water was placed on cold water on a test chart. All mentioned spots were left for one hour; water, ethanol (48%) and detergent (50%) were also tested for 16 hours. After these periods, the spot was gently wiped off with a tissue and the film was assessed for its integrity. This was rated between 0 to 5, where 0 = film totally destroyed/strongly discoloured and 5 = film fully intact without any defects/discolouration. The results for the clear coatings are shown in Tables 2A and 2B below.

**Table 2A: Properties**

| Ex. | Hardness | Resistances 1h | | | | |
|---|---|---|---|---|---|---|
| | | W | E48% | A50% | C | HP |
| A | 36 | 1 | 0 | 1 | 2 | 0 |
| 1 | 121 | 5 | 4 | 5 | 4 | 5 |
| B | 68 | 2 | 1 | 2 | 2 | 2 |
| 2 | 85 | 5 | 4-5 | 5 | 4-5 | 4 |
| 3 | 87 | 5 | 4 | 5 | 4-5 | 4-5 |
| 4 | 102 | 5 | 3-4 | 5 | 5 | 2 |
| 5 | 113 | 5 | 2 | 5 | 5 | 4-5 |

**Table 2B: Properties (continued)**

| Ex. | Resistances 16h | | | | Total score |
|---|---|---|---|---|---|
| | W | E48% | A50% | C | |
| A | 0 | 0 | 1 | 1 | 6 |
| 1 | 5 | 0-1 | 4-5 | 2 | 35 |
| B | 2 | 0-1 | 3 | 1 | 15.5 |
| 2 | 5 | 4 | 5 | 3-4 | 40.5 |
| 3 | 5 | 5 | 5 | 2 | 40 |
| 4 | 5 | 3 | 4-5 | 5 | 38 |
| 5 | 5 | 1 | 4-5 | 4-5 | 36.5 |

| | | | | | |
|---|---|---|---|---|---|
| Hardness = König hardness (seconds) W = water E48% = ethanol, 48% solution in demineralized water A50% = Andy, 50% solution in demineralized water (detergent) C = coffee HP = hot pan Total score = sum of all individual scores on stain resistances | | | | | |

## Claims

1. A process for preparing a Schiff base crosslinkable aqueous dispersion of a polyurethane A the process comprising the steps of:
(a) reacting the following components one to four (two and four where present) to form an acidic isocyanate terminated prepolymer that comprises anionic or potentially anionic functional groups thereon; where:
(1) component one comprises 10 to 80% by weight of at least one polyisocyanate optionally containing at least one anionic or potentially anionic dispersing group;
(2) optional component two comprises up to 15% by weight of at least one isocyanate-reactive polyol containing at least one anionic or potentially anionic dispersing group;
(3) component three comprises 15 to 85% by weight of at least one isocyanate reactive polyol other than component two if present, and having a weight average molecular weight greater than or equal to 500 Daltons optionally containing at least one anionic or potentially anionic dispersing group; and
(4) optional component four comprises up to 20% by weight of at least one isocyanate reactive polyol other than component three and two if present and having a weight average molecular weight less than 500 Daltons;
where if component two is not present component one or three comprise at least one anionic or potentially anionic dispersing group;
where the amounts of components one to four are expressed as a weight percentage calculated from the total amount of the above components (i.e. one and three and optional two and/or four where present) being 100%; and where the mixture used in step (a) is substantially free of volatile amines and N-alkyl pyrrolidinones;
(b) adding to the reaction mixture from step (a) an alkali metal neutralising agent in an amount from 0.05 to 6 parts by weight substantially to neutralise the isocyanate terminated prepolymer obtained from step (a); where the amount (in weight parts) of the alkali metal neutralising agent is calculated based on the weight of alkali metal in the neutralising agent relative to the total amount of components one to four in step (a) being equal to 100 parts; and
(c) reacting the neutralised prepolymer from step (b) with an active hydrogen compound to extend the chain of the prepolymer to form an aqueous dispersion of polyurethane A.

2. A process as claimed in claim 1, in which polyurethane A is Schiff base cross-linkable under ambient conditions.

3. A process as claimed in either preceding claim, in which either component one two or three comprises at least one anionic or potentially anionic dispersing group.

4. A process as claimed in either preceding claim, in which an equivalent ratio of amine groups to carbonyl groups in the Schiff base crosslinkable aqueous dispersion is 0.2 to 1.5.

5. A process as claimed in either preceding claim, in which step (a) comprises reacting
(1) 10 to 80% by weight of at least one polyisocyanate;
(2) 1 to 15% by weight of at least one isocyanate-reactive polyol containing at least one anionic or potentially anionic dispersing group;
(3) 15 to 85% by weight of at least one isocyanate reactive polyol other than (2), and having a weight average molecular weight ≥ 500 Daltons; and
(4) optionally up to 20% by weight of at least one isocyanate reactive polyol other than (2) and (3) and having a weight average molecular weight < 500 Dalton;
to form an acidic isocyanate terminated prepolymer that comprises anionic or potentially anionic functional groups and which is substantially free of volatile amines and N-alkyl pyrrolidinones.

6. A process as claimed in any preceding claim, in which step (b) occurs during or substantially immediately after step (a).

7. An aqueous dispersion of a polyurethane A obtained and/or obtainable by a process as claimed any preceding claim.

8. An aqueous coating composition comprising a polyurethane A obtained and/or obtainable by a process as claimed in any of claims 1-6 and a vinyl polymer B.

9. An aqueous coating composition according to claim 8, in which the vinyl polymer is Schiff base cross-linkable under ambient conditions.

10. An aqueous coating composition comprising:
(i) 10 to 95% by weight of a polyurethane A obtained by the reaction of:
(a) an isocyanate terminated prepolymer formed from components one to five comprising:
(1) 10 to 80 parts by weight of at least one polyisocyanate
(2) 1 to 15 parts by weight of at least one isocyanate-reactive polyol containing at least one anionic or potentially anionic dispersing group
(3) 15 to 84 parts by weight of at least one isocyanate reactive polyol other than (2) of weight average molecular weight ≥ 500 Daltons
(4) optionally up to 20 parts by weight of at least one isocyanate reactive polyol other than (2) or (3) of weight average molecular weight < 500 Daltons
(5) 0.05 to 6 parts by weight of an alkali metal neutralising agent (preferably whose cation acts as counterion of the anionic group of (1), (2) or (3))
where the amounts of (1), (2), (3), (4) and (5) are calculated as a weight parts relative to the total amount of components (1) to (5) being 100 weight parts,
(b) an active hydrogen chain extending compound; and
(ii) 90 to 5% by weight of a vinyl polymer B wherein the weight % amounts of (i) and (ii) are calculated as a percentage of the total amount of (i) and (ii) and these percentages add up to 100%;
wherein the polyurethane A contains carbonyl groups which are Schiff base crosslinkable under ambient conditions and/or the vinyl polymer B contains carbonyl groups which are Schiff base crosslinkable under ambient conditions, and
where the composition is:
substantially free of volatile amines and N-alkyl pyrrolidinones (preferably solvent free); and is neutralised with a metal neutralising agent and the composition comprises a polyamine and/or polyhydrazide compound.

11. An aqueous coating composition according to claim 10, wherein component (3) contains Schiff base crosslinkable carbonyl groups.

12. An article and/or substrate coated by a composition as claimed in any of claims 8 to 11.

13. A method of coating an article and/or substrate comprising the steps of
(I) applying a coating composition as claimed in any of claims 8 to 11 to an article and/or substrate, and
(II) drying the coating thereon to obtain a coated article and/or substrate.

## Patentansprüche

1. Verfahren zur Herstellung einer durch eine Schiff-Base quervernetzbaren wässrigen Dispersion eines Polyurethans A, wobei das Verfahren die folgenden Schritte umfasst:
(a) die Umsetzung der folgenden Komponenten eins bis vier (zwei und vier, falls vorhanden) unter Bildung eines sauren isocyanatterminierten Präpolymers, das anionische oder möglicherweise anionische funktionelle Gruppen daran umfasst, wobei:
(1) Komponente eins 10 bis 80 Gew.-% mindestens eines Polyisocyanats umfasst, das gegebenenfalls mindestens eine anionische oder möglicherweise anionische dispergierende Gruppe enthält,
(2) die fakultative Komponente zwei bis zu 15 Gew.-% mindestens eines isocyanatreaktiven Polyols umfasst, das mindestens eine anionische oder möglicherweise anionische dispergierende Gruppe enthält,
(3) Komponente drei 15 bis 85 Gew.-% mindestens eines isocyanatreaktiven Polyols, bei dem es sich nicht um Komponente zwei, falls vorhanden, handelt, umfasst und ein gewichtsmittleres Molekulargewicht von größer als oder gleich 500 Dalton aufweist und gegebenenfalls mindestens eine anionische oder möglicherweise anionische dispergierende Gruppe enthält, und
(4) die fakultative Komponente vier bis zu 20 Gew.-% mindestens eines isocyanatreaktiven Polyols, bei dem es sich nicht um Komponente drei und zwei, falls vorhanden, handelt, umfasst und ein gewichtsmittleres Molekulargewicht von weniger als 500 Dalton aufweist,
wobei, wenn Komponente zwei nicht vorhanden ist, Komponente eins oder drei mindestens eine anionische oder möglicherweise anionische dispergierende Gruppe umfasst,
wobei die als aus der Gesamtmenge der obigen Komponenten (d.h. eins und drei und gegebenenfalls zwei und/oder vier, falls vorhanden) berechneter Gewichtsprozentsatz ausgedrückten Mengen der Komponenten eins bis vier 100% betragen und wobei die in Schritt (a) eingesetzte Mischung im Wesentlichen frei von flüchtigen Aminen und N-Alkylpyrrolidonen ist,
(b) die Zugabe eines alkalimetallneutralisierenden Mittels in einer Menge von 0,05 bis 6 Gewichtsteilen zu der Reaktionsmischung aus Schritt (a), im Wesentlichen zum Neutralisieren des aus Schritt (a) erhaltenen isocyanatterminierten Präpolymers, wobei die Menge (in Gewichtsteilen) des alkalimetallneutralisierenden Mittels basierend auf dem Gewicht von Alkalimetall in dem neutralisierenden Mittel relativ zur Gesamtmenge an Komponenten 1 bis 4 in Schritt (a), die gleich 100 Teilen ist, berechnet wird, und
(c) die Umsetzung des neutralisierten Präpolymers aus Schritt (b) mit einer Verbindung mit aktivem Wasserstoff zur Verlängerung der Kette des Präpolymers unter Bildung einer wässrigen Dispersion von Polyurethan A.

2. Verfahren nach Anspruch 1, wobei Polyurethan A unter Umgebungsbedingungen durch eine Schiff-Base quervernetzbar ist.

3. Verfahren nach einem der vorhergehenden Ansprüche, wobei eine der Komponenten eins, zwei oder drei mindestens eine anionische oder möglicherweise anionische dispergierende Gruppe umfasst.

4. Verfahren nach einem der vorhergehenden Ansprüche, bei dem ein Äquivalenzverhältnis von Amingruppen zu Carbonylgruppen in der durch eine Schiff-Base quervernetzbaren wässrigen Dispersion 0,2 bis 1,5 beträgt.

5. Verfahren nach einem der vorhergehenden Ansprüche, wobei man bei Schritt (a)
(1) 10 bis 80 Gew.-% mindestens eines Polyisocyanats,
(2) 1 bis 15 Gew.-% mindestens eines isocyanatreaktiven Polyols mit mindestens einer anionischen oder möglicherweise anionischen dispergierenden Gruppe,
(3) 15 bis 85 Gew.-% mindestens eines isocyanatreaktiven Polyols, bei dem es sich nicht um (2) handelt, und mit einem gewichtsmittleren Molekulargewicht ≥ 500 Dalton und
(4) gegebenenfalls bis zu 20 Gew.-% mindestens eines isocyanatreaktiven Polyols, bei dem es sich nicht um (2) und (3) handelt, und mit einem gewichtsmittleren Molekulargewicht < 500 Dalton
umsetzt, unter Bildung eines sauren isocyanatterminierten Präpolymers, das anionische oder möglicherweise anionische funktionelle Gruppen umfasst und das im Wesentlichen frei von flüchtigen Aminen und N-Alkylpyrrolidonen ist.

6. Verfahren nach einem vorhergehenden Anspruch, bei dem Schritt (b) während oder im Wesentlichen unmittelbar nach Schritt (a) erfolgt.

7. Wässrige Dispersion eines Polyurethans A, erhalten und/oder erhältlich durch ein Verfahren nach einem der vorhergehenden Ansprüche.

8. Wässrige Beschichtungszusammensetzung, umfassend ein durch ein Verfahren nach einem der Ansprüche 1-6 erhaltenes und/oder erhältliches Polyurethan A und ein Vinylpolymer B.

9. Wässrige Beschichtungszusammensetzung nach Anspruch 8, wobei das Vinylpolymer unter Umgebungsbedingungen durch eine Schiff-Base quervernetzbar ist.

10. Wässrige Beschichtungszusammensetzung, umfassend:
(i) 10 bis 95 Gew.-% eines Polyurethans A, erhalten durch die Umsetzung von:
(a) einem isocyanatterminierten Präpolymer, gebildet aus Komponenten eins bis fünf, umfassend:
(1) 10 bis 80 Gewichtsteile mindestens eines Polyisocyanats,
(2) 1 bis 15 Gewichtsteile mindestens eines isocyanatreaktiven Polyols mit mindestens einer anionischen oder möglicherweise anionischen dispergierenden Gruppe,
(3) 15 bis 84 Gewichtsteile mindestens eines isocyanatreaktiven Polyols, bei dem es sich nicht um (2) handelt, mit einem gewichtsmittleren Molekulargewicht ≥ 500 Dalton,
(4) gegebenenfalls bis zu 20 Gewichtsteilen mindestens eines isocyanatreaktiven Polyols, bei dem es sich nicht um (2) oder (3) handelt, mit einem gewichtsmittleren Molekulargewicht < 500 Dalton
(5) 0,05 bis 6 Gewichtsteile eines alkalimetallneutralisierenden Mittels (dessen Kation vorzugsweise als Gegenion zur anionischen Gruppe von (1), (2) oder (3) wirkt),
wobei die Mengen von (1), (2), (3), (4) und (5) als Gewichtsteile, bezogen auf die 100 Gewichtsteilen entsprechende Gesamtmenge der Komponenten (1) bis (5), berechnet werden,
(b) einer kettenverlängernden Verbindung mit aktivem Wasserstoff und
(ii) 90 bis 5 Gew.-% eines Vinylpolymers B, wobei die Gewichtsprozentmengen von (i) und (ii) als Prozentsatz der Gesamtmengen von (i) und (ii) berechnet werden und die Summe dieser Prozentsätze 100% beträgt,
wobei das Polyurethan A Carbonylgruppen enthält, die unter Umgebungsbedingungen durch eine Schiff-Base quervernetzbar sind, und/oder das Vinylpolymer B Carbonylgruppen enthält, die unter Umgebungsbedingungen durch eine Schiff-Base quervernetzbar sind, und
wobei die Zusammensetzung:
im Wesentlichen frei von flüchtigen Aminen und N-Alkylpyrrolidonen (vorzugsweise lösungsmittelfrei) ist und mit einem metallneutralisierenden Mittel neutralisiert wird und die Zusammensetzung eine Polyamin- und/oder Polyhydrazidverbindung umfasst.

11. Wässrige Beschichtungszusammensetzung nach Anspruch 10, wobei Komponente (3) durch eine Schiff-Base quervernetzbare Carbonylgruppen enthält.

12. Erzeugnis und/oder Substrat, beschichtet mit einer Zusammensetzung nach einem der Ansprüche 8 bis 11.

13. Verfahren zum Beschichten eines Erzeugnisses und/oder Substrats, welches die folgenden Schritte umfasst:
(I) das Aufbringen einer Beschichtungszusammensetzung nach einem der Ansprüche 8 bis 11 auf ein Erzeugnis und/oder Substrat und
(II) das Trocknen der Beschichtung darauf, unter Erhalt eines beschichteten Erzeugnisses und/oder Substrats.

## Revendications

1. Procédé pour la préparation d'une dispersion aqueuse réticulable par base de Schiff d'un polyuréthane A, le procédé comprenant les étapes de :
(a) mise en réaction des composants suivants un à quatre (deux et quatre s'ils sont présents) pour former un prépolymère acide à terminaison isocyanate qui comprend sur celui-ci des groupes fonctionnels anioniques ou potentiellement anioniques ;
où :
(1) le composant un comprend 10 à 80 % en poids d'au moins un polyisocyanate contenant éventuellement au moins un groupe dispersant anionique ou potentiellement anionique ;
(2) le composant deux éventuel comprend jusqu'à 15 % en poids d'au moins un polyol réactif envers isocyanate contenant au moins un groupe dispersant anionique ou potentiellement anionique ;
(3) le composant trois comprend 15 à 85 % en poids d'au moins un polyol réactif envers isocyanate différent du composant deux s'il est présent, et possédant un poids moléculaire moyen en poids supérieur ou égal à 500 Daltons contenant éventuellement au moins un groupe dispersant anionique ou potentiellement anionique ; et
(4) le composant quatre éventuel comprend jusqu'à 20 % en poids d'au moins un polyol réactif envers isocyanate différent des composants trois et deux s'ils sont présents et possédant un poids moléculaire moyen en poids inférieur à 500 Dalton ;
où, si le composant deux n'est pas présent, le composant un ou trois comprend au moins un groupe dispersant anionique ou potentiellement anionique ;
où les quantités des composants un à quatre sont exprimées en tant que pourcentage en poids calculé par rapport à la quantité totale des composants ci-dessus (c'est-à-dire un et trois et éventuellement deux et/ou quatre s'ils sont présents) qui est de 100 % ; et où le mélange utilisé dans l'étape (a) est sensiblement exempt d'amines volatiles et de N-alkylpyrrolidinones ;
(b) ajout au mélange réactionnel de l'étape (a) d'un agent neutralisant de métal alcalin en une quantité de 0,05 à 6 partie (s) en poids pour neutraliser sensiblement le prépolymère à terminaison isocyanate obtenu de l'étape (a) ;
où la quantité (en parties en poids) de l'agent neutralisant de métal alcalin étant calculée sur la base du poids de métal alcalin dans l'agent neutralisant par rapport à la quantité totale des composants un à quatre dans l'étape (a) qui est égale à 100 parties ; et
(c) mise en réaction du prépolymère neutralisé de l'étape (b) avec un composé à hydrogène actif pour étendre la chaîne du prépolymère pour former une dispersion aqueuse de polyuréthane A.

2. Procédé selon la revendication 1, dans lequel le polyuréthane A est réticulable par base de Schiff dans des conditions ambiantes.

3. Procédé selon l'une ou l'autre des revendications précédentes, dans lequel l'un des composants parmi un, deux et trois comprend au moins un groupe dispersant anionique ou potentiellement anionique.

4. Procédé selon l'une ou l'autre des revendications précédentes, dans lequel un rapport équivalent des groupes amine aux groupes carbonyle dans la dispersion aqueuse réticulable par base de Schiff étant de 0,2 à 1,5.

5. Procédé selon l'une ou l'autre des revendications précédentes, dans lequel l'étape (a) comprend la mise en réaction de
(1) 10 à 80 % en poids d'au moins un polyisocyanate ;
(2) 1 à 15 % en poids d'au moins un polyol réactif envers isocyanate contenant au moins un groupe dispersant anionique ou potentiellement anionique ;
(3) 15 à 85 % en poids d'au moins un polyol réactif envers isocyanate autre que (2), et possédant un poids moléculaire moyen en poids ≥ 500 Daltons ; et
(4) éventuellement jusqu'à 20 % poids d'au moins un polyol réactif envers isocyanate autre que (2) et (3) et possédant un poids moléculaire moyen en poids < 500 Daltons ;
pour former un prépolymère acide à terminaison isocyanate qui comprend des groupes fonctionnels anioniques ou potentiellement anioniques et qui est sensiblement exempt d'amines volatiles et de N-alkylpyrrolidinones.

6. Procédé selon l'une quelconque des revendications précédentes, dans lequel l'étape (b) a lieu pendant ou sensiblement immédiatement après l'étape (a).

7. Dispersion aqueuse d'un polyuréthane A obtenu et/ou pouvant être obtenu par un procédé selon l'une quelconque des revendications précédentes.

8. Composition aqueuse de revêtement comprenant un polyuréthane A obtenu et/ou pouvant être obtenu par un procédé selon l'une quelconque des revendications 1 à 6 et un polymère vinylique B.

9. Composition aqueuse de revêtement selon la revendication 8, dans laquelle le polymère vinylique est réticulable par base de Schiff dans des conditions ambiantes.

10. Composition aqueuse de revêtement comprenant :
(i) 10 à 95 % en poids d'un polyuréthane A obtenu par la réaction de :
(a) un prépolymère à terminaison isocyanate formé à partir des composants un à cinq comprenant :
(1) 10 à 80 parties en poids d'au moins un polyisocyanate
(2) 1 à 15 partie(s) en poids d'au moins un polyol réactif envers isocyanate contenant au moins un groupe dispersant anionique ou potentiellement anionique
(3) 15 à 84 parties en poids d'au moins un polyol réactif envers isocyanate autre que (2), de poids moléculaire moyen en poids ≥ 500 Daltons
(4) éventuellement jusqu'à 20 parties en poids d'au moins un polyol réactif envers isocyanate autre que (2) ou (3), de poids moléculaire moyen en poids < 500 Daltons
(5) 0,05 à 6 parties en poids d'un agent neutralisant de métal alcalin (préférablement dont le cation agit en tant que contre-ion du groupe anionique de (1), (2) ou (3)
les quantités de (1), (2), (3), (4) et de (5) étant calculées comme parties en poids par rapport à la quantité totale des composants (1) à (5) qui est de 100 parties en poids,
(b) un composé d'extension de chaîne à hydrogène actif ; et
(ii) 90 à 5 % en poids d'un polymère vinylique B, les quantités en % en poids de (i) et (ii) étant calculées en tant que pourcentage de la quantité totale de (i) et (ii) et ces pourcentages s'additionnant jusqu'à 100 % ;
le polyuréthane A contenant des groupes carbonyle qui sont réticulables par base de Schiff dans des conditions ambiantes et/ou le polymère vinylique B contenant des groupes carbonyle qui sont réticulables par base de Schiff dans des conditions ambiantes, et
la composition étant :
sensiblement exempte d'amines volatiles et de N-alkylepyrrolidinones (préférablement exempte de solvant) ; et étant neutralisée par un agent neutralisant de métal et la composition comprenant un composé de type polyamine et/ou polyhydrazide.

11. Composition aqueuse de revêtement selon la revendication 10, le composant (3) contenant des groupes carbonyle réticulables par base de Schiff.

12. Article et/ou substrat revêtu par une composition selon l'une quelconque des revendications 8 à 11.

13. Procédé de revêtement d'un article et/ou d'un substrat comprenant les étapes de
(I) application d'une composition de revêtement selon l'une quelconque des revendications 8 à 11 à un article et/ou un substrat, et
(II) séchage du revêtement sur celui-ci pour obtenir un article et/ou un substrat revêtu.
